Europäisches Patentamt

European Patent Office

Office européen des brevets

(11) Publication number : **0 469 906 B1**

(12) **EUROPEAN PATENT SPECIFICATION**

(45) Date of publication of patent specification :
06.07.94 Bulletin 94/27

(51) Int. Cl.⁵ : **C10M 111/04,**
// (C10M111/04, 101:00,
103:00, 103:02, 105:24,
107:02, 107:12, 107:28,
107:30, 107:38, 107:50)

(21) Application number : **91307069.4**

(22) Date of filing : **01.08.91**

(54) **Solid lubricant and a sliding member having the solid lubricant embedded therein.**

(30) Priority : **02.08.90 JP 204011/90**

(43) Date of publication of application :
**05.02.92 Bulletin 92/06**

(45) Publication of the grant of the patent :
**06.07.94 Bulletin 94/27**

(84) Designated Contracting States :
**DE GB SE**

(56) References cited :
**EP-A- 0 000 697**
**EP-A- 0 116 882**
**EP-A- 0 372 559**
**GB-A- 2 223 504**
**US-A- 4 486 319**
**DERWENT, WORLD PATENT INDEX LATEST,**
**AN=83-804423, Derwent Publications Ltd,Lon-**
**don, GB; & JP-A-58 160 398 (MISUMI SHOJI**
**K.K.)**

(73) Proprietor : **OILES CORPORATION**
**3-2 Shiba-Daimon 1-chome**
**Minato-ku, Tokyo (JP)**

(72) Inventor : **Chou, Hideo**
**2-779-44 Zama**
**Zama-shi, Kanagawa-ken (JP)**
Inventor : **Sumiyoshi, Kikuo**
**860-4 Shobuzawa**
**Fujisawa-shi, Kanagawa-ken (JP)**
Inventor : **Ishikawa, Keizou**
**1-9-4 Nishi-Tsuruma**
**Yamato-shi, Kanagawa-ken (JP)**
Inventor : **Nishi, Yasunori**
**273 Ikerd Drive**
**S.E. Concord, N.C. 28025 (JP)**

(74) Representative : **Woods, Geoffrey Corlett et al**
**J.A. KEMP & CO.**
**14 South Square**
**Gray's Inn**
**London WC1R 5LX (GB)**

## Description

The present invention relates to a solid lubricant having wettability and fluidity, and containing a lubricating oil, and to a sliding member having the solid lubricant embedded therein.

So-called solid lubricant-embedding sliding members, in which apertures or grooves are formed in a metal substrate made of a copper alloy or iron alloy and a solid lubricant is embedded and fixed in the apertures or the grooves, have been used for various machine parts. Manufacturing methods for the solid lubricant-embedding sliding members include ① using a round graphite rod having spiral ridges formed at the outer circumferential surface as a core in a casting mold, casting a molten metal into the casting mold, and removing the core by cutting, thereby exposing the solid lubricant (graphite) spirally to the sliding surface (JP-B-39-2506 (1964)); ② adhering and fixing solid lubricant pellets (cylindrical form) to paper or film which is burnt and eliminated upon casting of a molten metal adhering and fixing the obtained solid lubricant pellets to the outer circumferential surface of a core rod composed of a shell sand mold to form a core in the casting mold (JP-B-56-14381(1981)), or adhering and fixing solid lubricant pellets to a core rod composed of a shell sand mold to form a core for the casting mold (JP-B- 52-5449(1977)), and casting a molten metal into the casting mold,thereby exposing the solid lubricant pellets on the sliding surface; or ③ forming apertures or grooves in a metal sub strate and embedding and fixing solid lubricant pellets coated with adhesives into the apertures or grooves.

In the manufacturing methods described above, ① has drawbacks that the molten metal cannot extend sufficiently upon casting since graphite of good heat conductivity is used as it is for the core and the shape of the sliding member is restricted, and ② has drawbacks that the solid lubricant pellets are detached or displaced during casting and it is difficult to obtain a sliding member in which the solid lubricant pellet are arranged regularly. Accordingly, ③ is generally used.

However, ③ also involves several technical problems:

(1) Since the size of the apertures (aperture diameter) disposed in the metal substrate is different depending on the size of the metal substrate, solid lubricant pellets to be embedded into such apertures having various sizes have to be prepared corresponding to the sizes of the varying apertures.

(2) Since it is difficult to automate the operation of embedding the solid lubricant pellets coated with adhesives, it has to be done manually, and the workability is extremely poor.

(3) Since solid lubricant pellets cannot be used for embedding and fixing solid lubricant into grooves, for example, spiral grooves or ring-shaped grooves disposed in the inner surface of a metal substrate, in particular a cylindrical metal substrate, it is necessary to provide a paste-like solid lubricant having a fluidity.

As an additional problem, skin eruption or other unexpected accidents may occur during the coating of adhesives on the solid lubricants in view of (2) described above.

The following solid lubricants are known:

A lubricant-containing heat-molded composition comprising a polymeric synthetic resinous base material blended with a lubricant adsorbent carrier, the carrier having a lubricant adsorbed thereon, and molded, the carrier having a melting point or a melt viscosity higher than the base material, having a surface area of at least 0.01 $m^2$/g, and being selected from:

① a non-fusible inorganic material;

② a synthetic high molecular weight polymeric resinous material;

③ a naturally occurring high molecular weight polymeric material; and

④ mixtures thereof;

and the base material being one or at least two polymeric synthetic resins (US-A-3779918).

A sliding surface embedding-type solid lubricant comprising a solid lubricant powder, a thermosetting synthetic resin or an ordinary temperature setting-type synthetic resin which is liquid at ordinary temperature for bonding the powdery particles and a lubricating oil impregnated between each of the powdery particles bonded by the synthetic resin (JP-A- 58-160398(1983)).

A composite lubricating material which can be molded into a desired shape and which has a high surface strength, comprising 0.5 to 90.0 % by weight of a pulverized, surface-treated and expanded graphite product (a + b) obtained by subjecting from 5 to 99.5 % by weight of an expanded graphite powder (a) having an apparent specific gravity of 0.01 to 0.50 obtained by wet oxidation of natural graphite, kish graphite and artificial graphite, and then expanding and disintegrating them by a high temperature heat treatment, to surface treatment with 0.5 to 95.0 % by weight of a lubricating oil (b), for example, turbine oil, machine oil, spindle oil or bearing oil, and 10 to 99.5 % by weight of an organic binder (c) composed of a thermosetting resin such as phenol resin, melamine resin, epoxy resin or polyimide resin, or a thermoplastic resin such as polyphenylene sulfide, polyacetal, polytetrafluoroethylene, nylon 6, nylon 11 or polyurethane (JP-A-63-23993(1988)).

An extrudable or injection moldable self-lubricating composition comprising 100 parts by weight of a molding product composed of 99 to 10 parts by weight of a lubricating oil and 20 to 90 parts by weight of a super high molecular weight polyethylene, and 0.1 to 20 parts by weight of a powder blended therewith (JP-A- 63-161075(1988)).

In consideration of the performance of the sliding member, since the embedded solid lubricant is supplied little by little to the sliding surface to form a solid lubricant film, it can serve for a long time without supplying any additional lubricant. However, since the application use is substantially restricted to that in a low speed and high load region, combined use with a lubricating oil is inevitable in an application outside this region.

Accordingly, in a solid lubricant-embedding sliding member to be used in an application outside the above-mentioned region, grooves must be formed on the sliding surface as grease pits or lubricating oil must be supplied from an oil feeding device to the sliding surface.

The present inventors believe that the all of the above problems can be overcome if the following requirements are satisfied: ① the solid lubricant can be embedded without restrictions on to the size and shape of the apertures or grooves disposed in the metal substrate, ② the solid lubricant can provide both lubricating effect by the lubricating oil and the lubricating effect by the solid lubricant, and ③ the solid lubricant can be bonded to the apertures or grooves in the metal substrate. We have found a solid lubricant which has wettability and a fluidity and which can be bonded to apertures or grooves disposed in a metal substrate even if it contains a lubricating oil.

The present invention provides a solid lubricant which comprises:

5 to 78 % by weight of a solid lubricant powder material;

5 to 30 % by weight of a lubricating oil which is in the form of a liquid or paste at ordinary temperature and which is at least one of a mineral oil, vegetable oil, synthetic oil or grease;

2 to 15 % by weight of a carrier for absorbing and containing the lubricating oil which carrier is at least one of a hydrocarbon wax, higher fatty acid, wax derived from a higher fatty acid, polyolefin, oleophilic fibers, crosslinked porous spherical particles composed of a styrene or methacrylic compound or porous calcium carbonate; and

15 to 50 % by weight of a thermosetting synthetic resin binder.

The present invention also provides a sliding member comprising a lubricant as defined above embedded in apertures or grooves disposed in a metal substrate and bonded thereto.

The present invention also provides a process for producing a member as defined above, which comprises flowing the lubricant into the apertures or grooves of the substrate.

Fig. 1 is a vertical cross sectional view of one embodiment of a flow charging device for a solid lubricant;

Fig. 2 is a cross sectional view taken along line II-II in Fig. 1; and

Fig. 3 is a vertical cross sectional view illustrating a sliding member having a solid lubricant embedded therein.

The solid lubricant powder material as the main ingredient is a material having a solid lubricating effect by itself. For example, at least one of the following may be used: graphite, such as (i) a natural graphite, (ii) an artificial graphite obtained by molding an aggregate such as a coke powder using a binder such as coal tar pitch which is itself carbonized and graphitized under heating and burning, baking the molded product at 700 to 1100°C, permeating the product with an impregnating agent such as pitch, and heat-treating the product at 2500 to 3000°C to graphitize the permeated product, or (iii) an expanded graphite prepared by treating, for example, natural flaky graphite, kish graphite or thermally decomposable graphite a strong acid to form a inter-graphite layer compound followed by washing with water and then subjecting the product to an expanding treatment in the c-axis direction instantaneously at at high temperature; molybdenum disulfide; polytetrafluoroethylene resin (PTFE); and boron nitride.

The solid lubricant powder material preferably has an average grain size of not more than 150 $\mu$m, more preferably 80 to 130 $\mu$m.

The blending amount of the solid lubricant power material is determined as the balance of the lubricating oil, the carrier and the synthetic resin binder, and it is from 5 to 78 % by weight, preferably from 33 to 74 % by weight, more preferably from 47 to 67% by weight.

The lubricating oil is at least one of a mineral oil such as machine oil or engine oil, a vegetable oil such as castor oil, a synthetic oil such as ester oil or silicone oil, and grease.

When the lubricating oil is mixed with the solid lubricant powder material described above and the carrier for absorbing and containing the lubricating oil, most of the lubricating oil is absorbed and contained in the carrier and a portion thereof is adsorbed and retained at the surface of the solid lubricant powder material.

The blending amount of the lubricating oil is from 5 to 30 % by weight, preferably from 8 to 20 % by weight, more preferably 10 to 15 % by weight. If it is blended in excess of 30 % by weight, the amount of the lubricating oil adsorbed at the surface of the solid lubricant powder material is increased and the lubricant oil is present at the bonding boundary between the solid lubricant and the apertures or the grooves in the metal substrate, which weakens the bonding strength of the solid lubricant with the apertures or grooves in the metal substrate. Thus a defect arises wherein the solid lubricant is drawn out of from the apertures or the grooves in the metal substrate. If the blending amount is less than 5% by weight, although the bonding strength of the solid lubricant to the apertures or the grooves in the metal substrate is increased, the amount of the lubricating oil which bleeds to the sliding surface is reduced, and therefore no improvement in the sliding performance by the lubricating oil can be achieved.

The carrier is blended together with the solid lubricant powder material and the lubricating oil described above.

The carrier absorbs and contains the lubricating oil, thereby increasing the flow viscosity of the lubricating oil, preventing bleeding out of the lubricating oil, and supplying the lubricating oil, which is uniformly dispersed, absorbed and contained in the solid lubricant, to the sliding surface.

The carrier is at least one of: (1) a hydrocarbon wax, (2) a higher fatty acid, (3) a wax derived from a higher fatty acid, (4) a polyolefin, eg. a polyolefin powder, (5) oleophilic fibers, (6) crosslinked porous spherical particles mainly composed of a styrene or methacrylic compound, and (7) porous calcium carbonate. They may be used alone or as a mixture of two or more.

Examples of the above carriers are now given:

(1) Hydrocarbon Wax

The hydrocarbon wax includes a paraffin wax having not less than 24 carbon atoms, an olefin wax having not less than 26 carbon atoms and an alkylbenzene having not less than 28 carbon atoms. Crystalline microcrystalline wax can also be used.

(2) Higher Fatty Acid

The higher fatty acid includes a saturated fatty acid having not less than 14 carbon atoms, for example myristic acid, palmitic acid, stearic acid, arachic acid or montanic acid, as well as an unsaturated fatty acid having not less than 18 carbon atoms, for example octadecenic acid and parinanric acid.

(3) Wax Derived from A Higher Fatty Acid

The waxy material, includes, (a) a higher fatty acid ester, (b) a higher fatty acid amide and (c) a higher fatty acid salt.

(a) Higher fatty acid ester

As the higher fatty acid ester, there can be mentioned the methyl or ethyl ester of a higher fatty acid having not less than 22 carbon atoms, for example, ethyl behenate and methyl tricosane; an ester of a monovalent higher fatty acid having not less than 16 carbon atoms and a higher monohydric alcohol having not less than 15 carbon atoms; octadecyl stearate, a monodiglycerine ester of higher fatty acid having not less than 13 carbon atoms, for example, 1,3-dilauric acid glyceride, monostearic acid glyceride; and a triglyceride of a higher fatty acid having not less than 14 carbon atoms.

(b) Higher fatty acid amide

As the higher fatty acid amide, there can be mentioned, in particular, palmitic acid amide, stearic acid amide and oleic acid amide.

(c) Higher fatty acid salt

As the higher fatty acid salt, there can be mentioned a salt with an alkali or alkaline earth metal, for example, lithium stearate and calcium stearate.

(4) Polyolefin

As the polyolefin, there can be mentioned a super higher molecular weight polyethylene powder, a high, medium or low density polyethylene powder and a polypropylene powder.

(5) Oleophilic Fibers

As oleophilic fibers, there can be mentioned cellulose fibers and polypropylene fibers.

(6) Crosslinked porous spherical particles mainly composed of a styrene or methacrylic compound.

As the porous spherical particles, there can be mentioned, for example, a styrene-divinylbenzene copolymer.

(7) Porous Calcium Carbonate

The blending amount of the carrier is from 2 to 15 % by weight, preferably 3 to 12 % by weight, more preferably 3 to 8 % by weight.

A most preferred combination can be obtained for good bonding strength of the solid lubricant to the apertures or the grooves in the metal substrate and lubricating property by setting the amount of the carrier toward the lower limit when the amount of lubricating oil is on the side of the lower limit, and by setting the amount of the carrier toward the upper limit when the amount of the lubricating oil is on the side of the upper limit.

The thermosetting synthetic resin binder bonds the solid lubricant powder materials to each other and bonds the solid lubricant to the apertures or the grooves in the metal substrate. Examples of the synthetic resin binder are epoxy resin, phenol resin and polyester resin. The epoxy resin is preferred.

As the epoxy resin, an ordinary temperature setting liquid epoxy resin and a thermosetting liquid or powdery epoxy resin may be used.

Specifically, as the ordinary temperature setting epoxy resin, there can be mentioned the two component epoxy resin "Cemedyne" (trade name, produced by Cemedyne Co.)

As the thermosetting liquid epoxy resin, there may be mentioned the one component epoxy resin "Technodyne" (trade name, produced by Taoka Kagaku Co.), the liquid epoxy resin "Epicoat" (trade name, produced by Yuka Shell Epoxy Co.), the latent curing agent "Novacure" (trade name, produced by Asahi Kasei Industry Co.) and "Amicure" (trade name, produced by Ajinomoto Co.)

As the thermosetting powdery epoxy resin, there can be mentioned "Epiform" (trade name, manufactured by Somal Co.). The powdery epoxy resin may also be used as a flow controlling agent for the liquid epoxy resin.

The blending amount of the binder is from 15 to 50 % by weight, preferably 15 to 35 % by weight, more preferably 20 to 30 % by weight.

The solid lubricant in the present invention is prepared as shown below.

The carrier is blended and mixed with the solid lubricant powder material and then the lubricating oil is blended and mixed with the thus-obtained mixture. Then, the synthetic resin binder is added to the resultant mixture, and they are kneaded to obtain a solid lubricant having wettability and fluidity.

The thus obtained solid lubricant is flow-charged at an ordinary temperature or under heating into the apertures or grooves disposed in a metal substrate, and subsequently the synthetic resin binder therein is cured at an ordinary temperature or under heating to bond the solid lubricant containing the lubricating oil with the apertures or grooves in the metal substrate, thereby obtaining a sliding member with a solid lubricant containing the lubricating oil embedded therein. As a method of flow-charging, transfer molding, compression molding or injection molding may, for example, be used. In case of a plate-like sliding member, there can be used a method of previously molding the solid lubricant into a plate-like shape, placing the thus-obtained plate-like solid lubricant on a plate-like sliding part formed with apertures of grooves and then flow charging the solid lubricant by press molding.

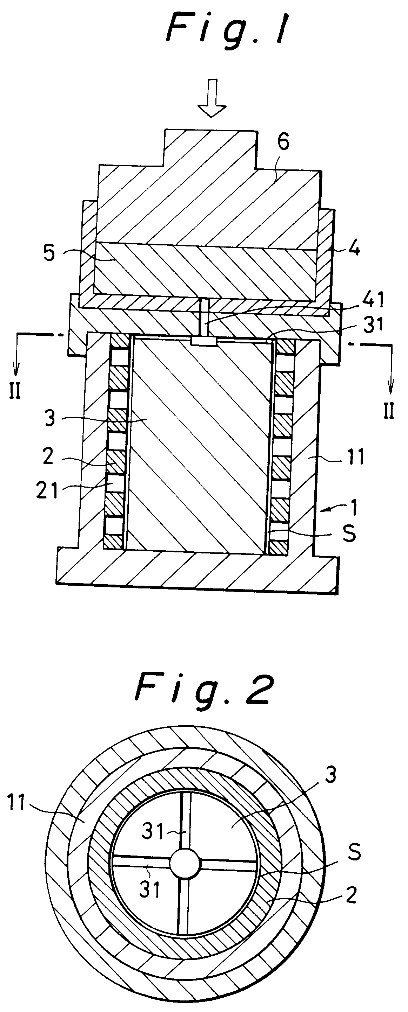

Fig. 1 is a cross sectional view illustrating one embodiment of a flow-charging device for the solid lubricant and Fig. 2 is a cross sectional view taken along line II-II in Fig. 1.

In the drawing, a holder 1 has a cylindrical portion 11; a sliding member material (metal substrate) 2 is fitted into the cylindrical portion 11 of the holder 1 with its outer circumferential surface constrained, and having apertures 21 formed such that they overlap each other in the outer circumferential direction; a guide member 3 has a radial flow channel 31 formed at the upper end surface and inserted in the inner surface of the sliding member material 2 with a slight gap S relative to the inner diametrical surface of the material 2; a vessel 4 is fitted to the upper end of the cylindrical portion 11 of the holder 1 which holds the material 2 and having a flow channel 41 in communication with the flow channel 31; a solid lubricant 5 having a wettability and a fluidity is charged in the vessel 4; and a pressing tool 6 is fitted vertically movably in the vessel 4.

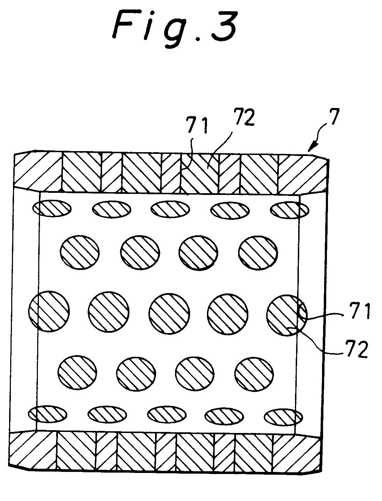

Fig. 3 is a cross sectional view illustrating a solid lubricant-embedding sliding member manufactured using the apparatus as described above, in which are shown a sliding member 7, apertures 71 formed in the sliding member material and a solid lubricant 72 embedded in the apertures 71.

The bonding strength between the solid lubricant and the metal substrate in the sliding member having the solid lubricant embedded therein according to the present invention is not less than 50 kgf/cm². At a 200 mm stroke of a reciprocating sliding test and after 100 x 10⁴ test cycles (400 Km test stroke), using mechanical structural carbon steel (S45C) as the mating member, ① the friction coefficient is not more than 0.135 and the abrasion amount is not more than 0.0125 mm under a load of 500 kgf/cm² at a sliding speed of 1 m/min; and ② the friction coefficient is not more than 0.125 and the abrasion amount is not more than 0.0105 mm under a load at 10 kgf/cm² at a sliding speed of 40 m/min.

The solid lubricant and the sliding member of the present invention have the following effects:

(1) Since the solid lubricant has wettability and fluidity, it can be embedded without restriction at all in the shape of the apertures or grooves disposed in the metal substrate.

(2) Since the solid lubricant itself contains a lubricating oil, the lubricating oil possessed by the carrier in the solid lubricant is supplied to the sliding surface during sliding movement relative to the mating member in the solid lubricant-embedding sliding member. Thus there is wettability by the lubricating oil and lubricating effects of the solid lubricant and the lubricating oil can be obtained. Accordingly, it is not necessary to supply an additional lubricant such as grease to the sliding surface as in the prior art for the solid lubricant-embedding sliding member under a low speed and high load condition, as well as during use outside such a condition. Use is possible under a wide range of conditions.

(3) Since the lubricating oil is absorbed and contained in the carrier, the bleeding out thereof is extremely small and a great amount of the lubricating oil is contained in the solid lubricant.

(4) Since the solid lubricant is embedded by flow charging into the aperatures or grooves disposed in the metal substrate, a conventional adhesive coating operation or embedding operation as used in the prior art is not necessary. The operability of the process for preparing the sliding member containing the lubricant is improved, and problems such as skin eruption of operators caused by the adhesive coating operation can be overcome thoroughly.

Examples

The solid lubricant and the sliding member having the solid lubricant embedded therein of the present invention are now further described in the following Examples.

Example I

(1) 53 % by weight of an artificial graphite powder having an average grain size of 100 μm obtained by pulverizing an artificial porous graphite molding product having an apparent specific gravity of 1.55 g/cm$^3$ and a porosity of 45 % (manufactured by Ibiden Co.),

(2) 43 % by weight of the artificial graphite powder described in (1) above and 10% by weight of a polytetrafluoroethylene (PTFE) powder ("Yunon" (trade name), manufactured by Nippon Vulker Co.), and

(3) 43 % by weight of the artificial graphite powder as described in (1) above and 10% by weight of a molybdenum disulfide powder,were used as the solid lubricant powder material; 5 % by weight of a hydrocarbon wax ("Godeswax" (trade name), manufactured by Nikko Fine Products Co.) as a carrier was added with the solid lubricant powder material in a mixer; and 15 % weight of a mineral oil as a lubricating oil ("Daffny Super Multi" (trade name), manufactured by Idemitsu Kosan Co.) were mixed with the resultant mixture to obtain a mixture of the solid lubricant powder material, the carrier and the lubricating oil.

Then, 16 % by weight of a thermosetting liquid epoxy resin ("Epicoat" (trade name), manufactured by Showa Shell Chemical Co.) as a synthetic resin binder, 5 % by weight of a latent-type setting agent ("Novacure" (trade name), manufactured by Asahi Kasei Industry Co.) and 6 % by weight of a powdery epoxy resin ("Epiform" (trade name), manufactured by Somal Co.) were mixed with the thus-obtained mixture for flow control and then kneaded to obtain a solid lubricant having wettability and fluidity.

A high strength brass casting product (JIS-H2205) was used as the metal substrate, which was fabricated by cutting into a cylindrical substrate of 60 mm inner diameter, 80 mm outer diameter and 80 mm length, and 54 apertures each of 10 mm diameter were formed in the cylindrical substrate so as to overlap each other in the circumferential direction of the cylindrical substrate to form a sliding member material.

While constraining the sliding member material at the outer circumferential surface, the solid lubricant was caused to flow at an ordinary temperature under a pressure of 50 kg/cm$^2$ from the inner circumferential surface of the material by the flow discharging device shown in Fig. 1 and was tightly charged into the apertures of the material.

Subsequently, the sliding member material having the solid lubricant held in the apertures was kept in a furnace at 80°C for 60 min to conduct primary setting of the synthetic resin binder and then further kept in the furnace at 140°C for 30 min to conduct the secondary setting of the synthetic resin binder. At the same time, the solid lubricant containing the lubricating oil was bonded to the apertures of the material, thereby obtaining the sliding member having the solid lubricant embedded therein (bearing bush).

Example II

(1) 40 % by weight of an expanded graphite powder having an average grain size of 120 μm obtained by pulverizing an expanded graphite sheet having an apparent specific gravity of 0.7 g/cm$^3$ and a thickness of 0.5 mm ("Nikafilm" (trade name), manufactured by Nippon Carbon Co.),

(2) 20 % by weight of the expanded graphite powder, and 20 % by weight of the artificial graphite powder, and

(3) 20 % by weight of the expanded graphite powder and 20 % by weight of a boron nitride powder,were used as the solid lubricant powder material; 8 % by weight of a higher fatty acid (stearic acid) was added as a carrier to the solid lubricant powder material and mixed in a mixer; and 17 % by weight of a mineral oil as a lubricating oil (same as in Example I) were mixed with resultant mixture to obtain a mixture of the solid lubricant powder material, the support or the carrier and the lubricating oil.

Then, 21 % by weight of a thermosetting liquid epoxy resin (same as in Example I) as a synthetic resin binder, 6 % by weight of a latent type curing or setting agent (same as in Example I) and 8 % by weight of a powdery epoxy resin (same as in Example I) for flow control were mixed with the thus-obtained mixture and then kneaded to obtain a solid lubricant having wettability and fluidity.

After manufacturing a sliding member material using the same high strength brass casting product as in Example I as the metal substrate, the solid lubricant was tightly charged in the apertures of the material by the same procedure as in Example I.

Subsequently, the solid lubricant-embedding sliding member was obtained by the same procedure as in Example I.

Example III

(1) 35 % by weight of the same artificial graphite powder as in Example I,

(2) 20 % by weight of the artificial graphite powder and 15 % by weight of a polytetrafluoroethylene powder (as in Example I), and

(3) 20 % by weight of the artificial graphite powder and 15 % by weight of a molybdenum disulfide powder, were used as the solid lubricant powder material; 7 % by weight of a super high molecular weight polyethylene powder ("Hizexmil- lion" (trade name), manufactured by Mitsui Petrochemical Industry Co.), 3% by weight of a higher fatty acid amide (mixture of oleic acid and stearic acid) were added as a carrier to the solid lubricant powder material and mixed in a mixer; and 20 % by weight of a mineral oil as a lubricating oil (same as in Example I) were mixed with the resultant mixture to obtain a mixture of the solid lubricant powder material, the support or the carrier and the lubricating oil.

Then, 21 % by weight of a thermosetting liquid epoxy resin (same as in Example I) as the synthetic resin binder, 6 % by weight of a latent type setting agent (same as in Example I) and 8 % by weight of a powdery epoxy resin (same as in Example I) for flow control were mixed with the thus-obtained mixture and then kneaded to obtain a solid lubricant having wettability and fluidity.

After manufacturing a sliding member material using the same high strength brass casting product as in Example I as the metal substrate, the solid lubricant was tightly charged in the apertures of the material by the same procedure as in Example I.

Subsequently, the solid lubricant-embedding sliding member was obtained by the same procedure as in Example I.

Example IV

(1) 70 % by weight of a molybdenum disulfide powder,

(2) 60 % by weight of the molybdenum disulfide powder and 10 % by weight of a polytetrafluoroethylene powder (as in Example I), were used as the solid lubricant powder material; 5 % by weight of a hydrocarbon wax (the same as in Example I) was added as a carrier to the solid lubricant powder material and mixed by a mixer; and 8 % by weight of mineral oil as a lubricating oil (same as in Example I) were mixed with the thus-obtained mixture to obtain a mixture of the solid lubricant powder material, the support or the carrier and the lubricating oil.

Then, 11 % by weight of a thermosetting liquid epoxy resin (same as in Example I) as a synthetic resin binder, 3 % by weight of a latent type setting agent (same as in Example I) and 4 % by weight of a powdery epoxy resin (same as in Example I) for flow control were mixed with the thus-obtained mixture and then kneaded to obtain a solid lubricant having wettability and fluidity.

After manufacturing a sliding member material using the same high strength brass casting product as in Example I as the metal substrate, the solid lubricant was tightly charged in the apertures of the material by the same procedure as in Example I.

Subsequently, the solid lubricant-embedding sliding member was obtained by the procedure as in Example I.

Example V

(1) 53 % by weight of the same artificial graphite powder as in Example I,

(2) 43 % by weight of the artificial graphite powder and 10 % by weight of a polytetrafluoroethylene (PTFE) powder (same as in Example I), and

(3) 43 % by weight of the artificial graphite powder and 10 % by weight of a boron nitride powder were used as the solid lubricant powder material; 5 % by weight of a porous styrene-divinylbenzene copolymer powder ("Techpolymer" (trade name) manufactured by Sekisui Kaseihin Kogyo Co.) as a carrier were added with the solid lubricant powder material by a mixer; and 15 % by weight of a mineral oil as a lubricating oil (same as in Example I) were mixed with the resultant mixture to obtain a mixture of the solid lubricant powder material, the support or the carrier and the lubricating oil.

Then, 16 % by weight of a thermosetting liquid epoxy resin (same as in Example I) as a synthetic resin binder, 5 % by weight of a latent type setting agent (same as in Example I) and 6 % by weight of powdery epoxy resin (same as in Example I) for flow control were mixed with the resultant mixture and then kneaded to obtain a solid lubricant having wettability and fluidity.

After manufacturing a sliding member material using the same high strength brass casting product as in Example I as the metal substrate, the solid lubricant was tightly charged in the apertures of the material by the same procedure as in Example I.

Subsequently, the solid lubricant-embedding sliding member was obtained by the same procedure as in Example I.

Tests were carried out as follows:

(Bonding Strength Test)

To test the bonding strength, a push-pull gauge was placed on the solid lubricant embedded in the apertures of the sliding member to measure the drawing-out force (kgf/cm$^2$) of the solid lubricant from the apertures. The bonding strength was the measured value.

(Sliding Property Test)

For the sliding property, the friction coefficient and the abrasion amount were measured under the following conditions:

(1)

| Load: | 500 kgf/cm$^2$ |
|---|---|
| Speed: | 1 m/min |
| Mating member: | Carbon steel for machine structure use (S45C) Reciprocating |
| Sliding test: | Stroke 200 mm |
| Test cycle: | 100 x 10$^4$ (400 km) |

(2)

| Load: | 10 kgf/cm$^2$ |
|---|---|
| Speed: | 40 m/min |
| Mating member: | Carbon steel for machine structure use (S45C) Reciprocating |
| Sliding test: | Stroke 200 mm |
| Test cycle: | 10 x 10$^4$ (400 km) |

The results are shown in the following table:

Table

| Example | | Solid lubricant ingredient composition (wt%) | | | | Bonding strength (Kgf/cm²) | Test condition (1) | | Test condition (2) | |
|---|---|---|---|---|---|---|---|---|---|---|
| | | Solid lubricant powder material | Carrier | Lubricating oil | Resin binder | | Friction coefficient | Abrasion amount (mm) | Friction coefficient | Abrasion amount (mm) |
| Example I | ① | Artificial graphite: 53 | Hydrocarbon wax: 5 | Mineral oil: 15 | 27 | 62 | 0.09~0.10 | 0.008 | 0.07~0.09 | 0.008 |
| | ② | Artificial graphite: 43 PTFE:10 | | | | 58 | 0.09~0.11 | 0.010 | 0.09~0.10 | 0.009 |
| | ③ | Artificial graphite: 43 · MoS₂:10 | | | | 60 | 0.10~0.11 | 0.012 | 0.09~0.11 | 0.010 |
| Example II | ① | Expanded graphite: 40 | Higher fatty acid: 8 | Mineral oil: 15 | 35 | 50 | 0.10~0.12 | 0.009 | 0.09~0.10 | 0.009 |
| | ② | Expanded graphite: 20 PTFE: 20 | | | | 60 | 0.10~0.11 | 0.008 | 0.09~0.11 | 0.010 |
| | ③ | Expanded graphite: 20 BN: 20 | | | | 58 | 0.11~0.13 | 0.011 | 0.10~0.12 | 0.010 |
| Example III | ① | Artificial graphite: 35 | Super high molecular weight poly-ethylene: 7 Higher fatty acid amide: 3 | Mineral oil: 20 | 35 | 56 | 0.08~0.10 | 0.007 | 0.07~0.09 | 0.007 |
| | ② | Artificial: 20, PTFE: 15 | | | | 55 | 0.08~0.11 | 0.008 | 0.08~0.10 | 0.008 |
| | ③ | Artificial graphitee: 20 MoS₂: 15 | | | | 58 | 0.09~0.11 | 0.010 | 0.08~0.10 | 0.009 |
| Example IV | ① | MoS₂: 70 | Hydrocarbon wax: 5 | Mineral oil: 7 | 18 | 55 | 0.10~0.12 | 0.011 | 0.09~0.11 | 0.010 |
| | ② | MoS₂: 60, PTFE: 10 | | | | 50 | 0.10~0.11 | 0.010 | 0.09~0.10 | 0.010 |
| Example V | ① | Artificial graphite: 53 | Porous styrene-divinyl benzene copolymer: 5 | Mineral oil: 15 | 27 | 60 | 0.09~0.10 | 0.008 | 0.07~0.09 | 0.008 |
| | ② | Argiricial graphite: 43 PTFE: 10 | | | | 56 | 0.09~0.11 | 0.010 | 0.09~0.10 | 0.010 |
| | ③ | Argificial graphite: 43 MoS₂:10 | | | | 58 | 0.09~0.11 | 0.012 | 0.09~0.11 | 0.010 |

EP 0 469 906 B1

## Table (continued)

| | | Solid lubricant ingredient composition (wt%) | Bonding strength (Kgf/cm²) | Test condition (1) | | Test condition (2) | |
|---|---|---|---|---|---|---|---|
| | | | | Friction coefficient | Abrasion amount (mm) | Friction coefficient | Abrasion amount (mm) |
| Comp. Example | ① | Graphite pellets bonded to apertures with adhesives (non lubrication) | 70 | 0.12~0.30 | 0.045 | —* | —* |
| | ② | Graphite pellets bonded to apertures with adhesives (gerase coated on the sliding surface) | 70 | 0.09~0.13 | 0.013 | 0.09~0.35 | 0.035** |

(Note)  In the Table, the abrasion amount (mm) in Example I through Example V was measured as the change in size for the sliding surface of the sliding member after elapse of the test stroke (400 km).

*  :  Since an abrupt increase was observed in the friction coefficient and the abrasion amount at the 1 km test stroke the subsequent test was interrupted.

** :  Measured value for the abrasion amount at 300 km test stroke..

The bonding strength of the solid lubricant of the lubricant of the present invention to the apertures in the sliding member (drawing-out force) is lower than prior art lubricants as shown in the comparative examples.

However, the solid lubricant of the present invention containing the lubricating oil in the Examples had a bonding strength of not less than 50 kgf/cm², and the sliding properties in the low speed/high load region (under test conditions (1) above) in the appropriate application use for the solid lubricant-embedding sliding member, as well as in other application uses out of the low speed/high load region (under test conditions (2) above) were superior to those of the prior art. The solid lubricant of the present invention in the Examples, could be used in the sliding members without problems.

In the sliding member of Comparative Example 1, the friction coefficient was gradually increased in the test under the test condition (1). The abrasion amount abruptly increased at 300 km test stroke. Since the bearing temperature, friction coefficient and abrasion amount were increased abruptly at 1 km test stroke after the start of the test under the test conditions (2) above, the test was interrupted.

The sliding member of Comparative Example (2) showed substantially the same performance as the sliding member of Example I through Example V in the test under the test conditions (1), but grease coated on the sliding surface began to be squeezed out to the sliding surface at 200 km test stroke and both the friction coefficient and the abrasion amount increased abruptly at the 300 km test stroke under the test conditions (2). Accordingly the test was interrupted.

On the other hand, since the lubricating oil is contained in the solid lubricant of the present invention in the Examples, it exhibited stable performance without the need to additionally supply a lubricant not only in the low speed/high load region (the test condition (1)) as the appropriate application use for the solid lubricant-embedding sliding member but also in other application uses outside this region (the test condition (2)).

## Claims

1. A solid lubricant which comprises:
   5 to 78 % by weight of a solid lubricant powder material;
   5 to 30 % by weight of a lubricating oil which is in the form of a liquid or paste at ordinary temperature and which is at least one of a mineral oil, vegetable oil, synthetic oil or grease;
   2 to 15 % by weight of a carrier for absorbing and containing the lubricating oil which carrier is at least one of a hydrocarbon wax, higher fatty acid, wax derived from a higher fatty acid, polyolefin, oleophilic fibers, crosslinked porous spherical particles composed of a styrene or methacrylic compound or porous calcium carbonate; and
   15 to 50 % by weight of a thermosetting synthetic resin binder.

2. A lubricant according to claim 1 wherein the solid lubricant powder material is at least one of graphite, molybdenum disulfide, a polytetrafluoroethylene resin or boron nitride.

3. A lubricant according to claim 1 or 2 wherein the lubricating oil is at least one of a machine oil, engine oil, caster oil, ester oil or silicone oil.

4. A sliding member comprising a lubricant as defined in any one of the preceding claims embedded in apertures or grooves disposed in a metal substrate and bonded thereto.

5. A member according to claim 4 wherein the sliding surface of the metal substrate is a flat, cylindrical or spherical surface.

6. A process for producing a member as defined in claim 4 or 5, which comprises flowing the lubricant into the apertures or grooves of the substrate.

## Patentansprüche

1. Festes Schmiermittel, umfassend:
   5 bis 78 Gew.% eines festen pulverförmigen Schmiermittels;
   5 bis 30 Gew.% eines bei normaler Temperatur als Flüssigkeit oder Paste vorliegenden Schmieröls, das wenigstens ein Stoff aus einem Mineralöl, einem Pflanzenöl, einem synthetischen Öl oder einem Fett ist;
   2 bis 15 Gew.% eines Trägers zum Absorbieren und Zurückhalten des Schmieröls, der wenigstens ein Stoff aus einem Kohlenwasserstoffwachs, einer höheren Fettsäure, einem aus einer höheren Fettsäure abgeleiteten Wachs, einem Polyolefin, oleophilen Fasern, vernetzten porösen sphärischen Teilchen, zusammengesetzt aus einer Styrol- oder Methacrylsäure-Verbindung oder porösem Calciumcarbonat; und 15 bis 50 Gew.% eines hitzehärtbaren synthetischen Binderharzes.

2. Schmiermittel gemäss Anspruch 1, in dem das feste pulverförmige Schmiermittel wenigstens ein Stoff aus Graphit, Molybdändisulfid, Polytetrafluorethylenharz oder Bornitrid ist.

3. Schmiermittel gemäss Anspruch 1 oder 2, in dem das Schmieröl wenigstens ein Stoff aus Maschinenöl, Motorenöl, Rhizinusöl, Esteröl oder Siliconöl ist.

4. Gleitteil, umfassend ein Schmiermittel gemäss einem der vorstehenden Ansprüche, das in in ein Metall eingeformte Aperturen oder Vertiefungen eingebettet und daran gebunden wird.

5. Gleitteil gemäss Anspruch 4, in dem die Gleitfläche des Metallsubstrats eine flache, zylindrische oder sphärische Oberfläche ist.

6. Verfahren zur Herstellung eines Teils gemäss Anspruch 4 oder 5, das das Fliessen des Schmiermittels in die Aperturen oder Vertiefungen des Substrats umfasst.

**Revendications**

1. Lubrifiant solide comprenant :
de 5 à 78 % en poids d'une poudre lubrifiante solide ;
de 5 à 30 % en poids d'une huile lubrifiante qui est sous la forme d'un liquide ou d'une pâte à la température ordinaire et qui est au moins l'un des membres du groupe comprenant une huile minérale, une huile végétale, une huile synthétique ou une graisse ;
de 2 à 15 % en poids d'un support destiné à absorber et contenir l'huile lubrifiante, ledit support étant au moins l'un des membres du groupe comprenant une cire hydrocarbonée, un acide gras supérieur, une cire dérivée d'un acide gras supérieur, une polyoléfine, des fibres oléophiles, des particules sphériques poreuses réticulées constituées d'un composé styrénique ou méthacrylique ou du carbonate de calcium poreux; et
de 15 à 50 % en poids d'un liant de résine synthétique thermodurcissable.

2. Lubrifiant selon la revendication 1, dans lequel la poudre lubrifiante solide est au moins l'un des membres du groupe comprenant le graphite, le disulfure de molybdène, une résine polytétrafluoroéthylène ou du nitrure de bore.

3. Lubrifiant selon la revendication 1 ou 2, dans lequel l'huile lubrifiante est au moins l'un des membres du groupe comprenant une huile pour machines, une huile de moteur, l'huile de ricin, une huile d'esters ou une huile de silicone.

4. Pièce coulissante comprenant un lubrifiant tel que défini dans l'une quelconque des revendications précédentes, le lubrifiant étant inclus dans des orifices ou rainures disposés dans un substrat métallique, et lié à ceux-ci.

5. Pièce selon la revendication 4, dans laquelle la surface coulissante du substrat métallique est une surface plate, cylindrique ou sphérique.

6. Procédé de production d'une pièce telle que définie dans la revendication 4 ou 5, qui comprend l'étape consistant à couler le lubrifiant dans les orifices ou rainures du substrat.

EP 0 469 906 B1

*Fig. 1*

*Fig. 2*

# Fig.3